# EUROPEAN PATENT SPECIFICATION

(11) **EP 2 578 428 B1**
(45) Date of publication and mention of the grant of the patent: **18.01.2017**
(21) Application number: 12157538.5
(22) Date of filing: 29.02.2012
(51) Int. Cl.: B60K 6/44, B60K 6/445, B60K 6/387, B60W 20/00, B60K 6/442, B60K 6/40

(54) **Flexible parallel and serial hybrid device**
Flexible parallele und serielle Hybridvorrichtung
Dispositif hybride flexible en parallèle et en série

(30) Priority: 06.10.2011 EP 11008087
(43) Date of publication of application: 10.04.2013
(73) Proprietor: MAGNA STEYR Engineering AG & Co KG, 8041 Graz (AT)
(72) Inventor: Erjawetz, Konstantin, 8010 Graz (AT); Teuschl, Gerald, 8020 Graz (AT)
(74) Representative: Zangger, Bernd

(56) References cited:
- EP-A1- 0 552 140
- EP-A1- 2 062 770
- FR-A1- 2 834 938
- US-A1- 2009 098 969

## Description

The present invention relates to a device for operating a hybrid drive device having an internal combustion engine, at least two other drive units, and at least one separating clutch between them. The invention is in more detail related to a concept that uses two electrical traction drives according the features of the claims.

### Description of Related Art

Hybrid vehicles having a parallel hybrid drive usually have an internal combustion engine, at least another drive unit, in particular an electric machine, and a transmission for setting the transmission ratio between input and output in the drivetrain. If there is a separating clutch between the internal combustion engine and the other drive unit, then the vehicle may be driven jointly by the internal combustion engine and the other unit, or by only the other unit alone. If the vehicle is driven only by the other unit, then the internal combustion engine may be started by engaging the separating clutch. Typically they use a single electric machine powered by an energy storage device such as a battery or a capacitor which provides electrical propulsion assistance to the vehicle engine to help reduce fuel consumption during acceleration and/or steady state driving conditions. During deceleration and/or steady state driving the surplus mechanical energy is used to charge the energy storage device through the machine, which in this mode acts as a generator.

The switching of two or more electric machines between parallel and series operation has previously been used for speed control, for example in automotive cooling fans which require varying degrees of cooling performance. Two electric machines of identical specification in series rotate at half the speed compared to the same two electric machines connected in parallel for a given input voltage.

In hybrid drive and variable force input generator systems however, a single electric maschine is generally used, typically of the permanent magnet type. Typically the power demands for an electric machine which is used as propulsion motor are higher than for an electric machine which is used as a generator to load a battery, or to supply energy to electric consumers of the vehicle. The magnetic design, including number, size and orientation of the permanent magnets of the electric machine must be done in consideration of maximum torque and power. When used as generator with lower demands on torque and power, the strong magnetic field of the permanent magnets must be compensated by a corresponding control of the magnetic field generated in the stator windings. The result is a poor degree of efficiency. The choice of motor specification in a hybrid drive must therefore generally be a compromise between good performance as a motor and as a generator; one conventional motor is not optimized for both kinds of operation.

In so-called parallel hybrid drives, starting is effected purely electrically by means of an electric motor which is connected with a transmission input shaft. Meanwhile the combustion engine is at standstill and is disengaged from the transmission input shaft by a non-positive clutch. At a higher power requirement, e. g. exceeding a certain higher travelling speed, the combustion engine is started by the closing of the clutch, with the combustion engine then serving as a prime mover. The electric motor can then be used as an additional power source or a generator for charging the vehicle battery.

US 20060096795 teaches two electrical machines to be arranged in a common housing, and one of the stators of the electrical machines together with the electronic control circuit and/or the other stator are accommodated on a common carrier. This parallel hybrid solution is arranged to minimize the volume of the two electrical machines. Between the two machines a control unit is installed. Both electrical machines can be used to start the combustion engine.

Further prior art is known from US 2009/098969 A1 which shows the features of the preambule of claim 1.

It is the intention of the invention to create a hybrid parallel drive that is to adapt to different drive situation.

It would be desirable to overcome the disadvantages of known systems in a manner to increase efficiency provided by hybrid drive systems and variable force input generators by providing a more flexible yet still simple and inexpensive system.

The solution provides an arrangement of a first and second electrical traction drive parallel to the main axis. The two electrical traction drives are arranged with an interruptable element between the electrical traction drives. The interruptable element allows starting the combustion engine by the first electrical traction drive while driving electrically. Advantageously the second electrical drive provides the power in this situation. It is an advantage that continuous power is provided during the starting process of the combustion engine.

It is an advantage to couple the parallel axis to the main axis using transmission means, so that the volume needed for the electrical traction drives is separated from the main axis. This allows a higher freedom to arrange components.

Using two electrical traction drives instead of one is a cost-efficient solution, even if the additional power control electronics for the second electrical traction drive are taken into account. Especially when the first and second electrical traction drive share key components such as stator and/or rotor, and have similar power levels, the scale effects of a higher production number will equalize the additional number of components. Furthermore, the usage of two electrical traction drives instead of one leads to a reduction of current which has to be supplied to and from those electrical traction drive, in comparison of the current which would have to be supplied to and from only one electrical traction drive. As a consequence, the transistors within the power electronics controlling the electrical traction drives have to switch less current. This leads to a reduction of power density, making it easier to cool the transistors. Furthermore, the scale effect of higher production numbers also applies to the power electronics components, even more so because the components are less expensive since the current that is to be controlled is lower.

### Short description of Invention

The invention is described in the figures and in more detail in the description below.
Figure 1 shows the concept of the invention
Figure 2 shows the different methods to use the concept
Figure 3 shows the solution of concept in more details.

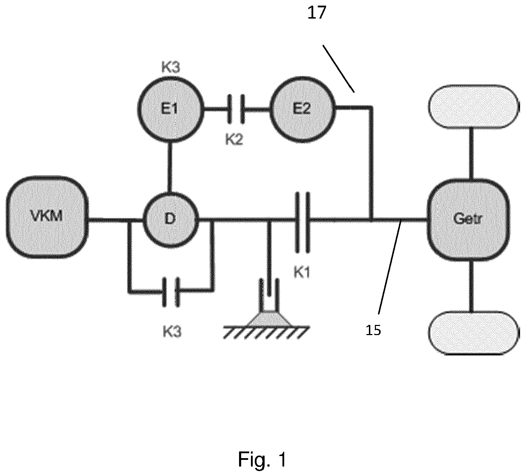

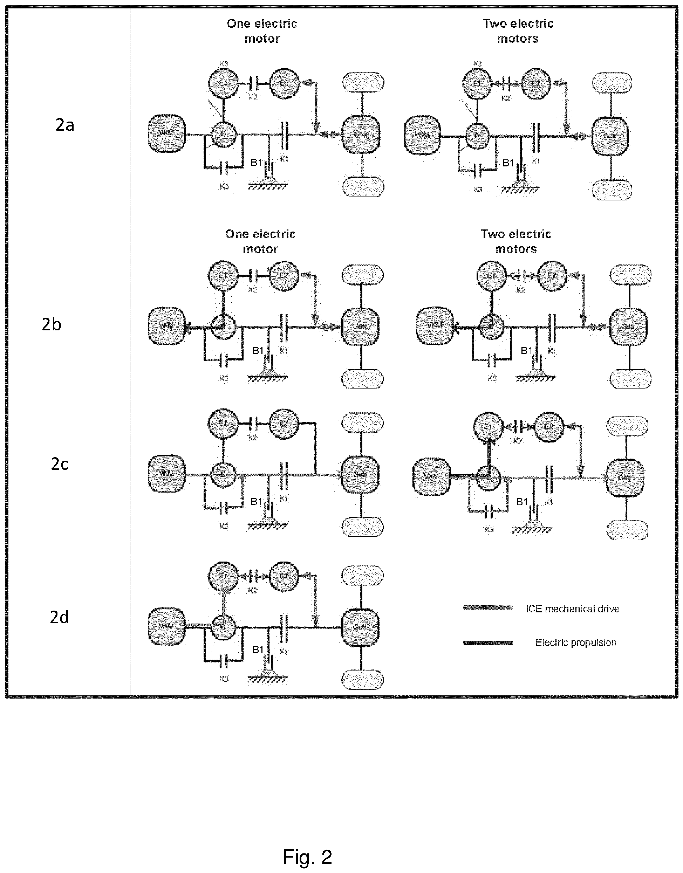

In figure 1 the concept is explained. An internal combustion machine VKM, 1 is connected to a planetary gear set D, 14 and via this planetary gear set D, 14 via a first clutch K1, 11 with a drive gearbox "Getr", 13, which may include a differential. The planetary gear set D, 14 is connected to a first electrical traction drive E1, 7. The planetary gear set D, 14 includes a third clutch K3, which is prepared to connect two of the three elements of the planetary gear set D, 14. The internal combustion engine VKM, 1, the planetary gear set D, 14 and the first clutch K1, 7 are arranged on a main axis 15. The drive gearbox "Getr", 13 may also be arranged along the main axis 15, but may be located along a different axis as well. A brake B1, 10 is prepared to brake one element of the planetary gear set D,14. First electrical traction drive E1, 7 is connected via a second clutch K2, 8 to a second electrical traction drive E2, 9.The concept shows that the drivetrain is split into two axes: the main axis 15 as in prior art, and a second axis 17, which is arranged parallel to the main axis 15. At least one of the first and second electrical traction devices E1, 7 and E2, 9 is arranged on the second axis 17. Figure 2 shows the different drive situations of the concept. Four drive situations are explained in detail. In the drive situation of 2a pure electrical driving is shown. On the left illustration a single electrical traction drive is driving the vehicle. The second electrical traction drive E2, 9 is connected to the gearbox "Getr", 13. The first clutch K1, 7 and the second clutch K2 8 are open and brake 10 is also open.

In one advantageous embodiment first clutch K1, 11 and brake B1, 10 are actuated by a single common actuator. The actuator is also prepared to support an idle status.

On the right illustration the situation is shown with two electrical traction motors used for vehicle propulsion. The electrical traction motors E1, 7 and E2, 9 are in this embodiment connected by second clutch K2, 8, which is closed.

It is shown that the use of serial arranged two electrical drives allow a flexible driving situation dependent on the power needed for electrical driving.

Figure 2b shows the situation during the start of the internal combustion machine during electrical driving as shown in Fig. 2a. Either first electrical traction drive E1, 7 or both first and second electrical traction drives E1, 7 and E2, 9 are connected by second clutch K2, 8 to inject energy to the internal combustion engine VKM, 1 for starting it. To achieve the start brake B, 10 is closed, first clutch K1, 11 is open.

For starting the internal combustion engine VKM, 1 only one of the two electrical traction drives, the electrical traction drive E1, 7 must be connected to the internal combustion engine VKM, 1 via the planetary gear set D, 14 in one preferred embodiment. The second electrical traction drive E2, 9 is decoupled from the first electrical traction drive E1, 7 but still connected to the gearbox "Getr", 13.Thereby it is possible to continue driving electrically with second electrical traction drive E2, 9 while starting the internal combustion engine VKM, 1 with first electrical traction drive E1, 7.

In an alternative embodiment both first and second electrical traction drives E1, 7 and E2, 9 are used to start the internal combustion engine VKM, 1. Using two electrical traction drives the second clutch K2, 8 is coupling the two electrical traction drives together. In this embodiment, the vehicle inertia may support the starting process of the internal combustion engine VKM, 1. Contrary to prior art, the embodiment allows a smooth start of the internal combustion engine VKM, 1 by controlling the first and second electrical traction drives E, 1 and E2, 9 accordingly. The second clutch K2, 8 may also be controlled accordingly. The use of two serially arranged electrical traction drives allows a very flexible use in starting the combustion engine VKM, 1.

Fig. 2c shows a pure combustion engine driving mode in the left illustration and a parallel hybrid driving mode in the right illustration. The internal combustion engine VKM, 1 is connected to the gearbox "Getr", 13 via the planetary gear set D, 14 and the first clutch K1, 11, which is now closed.

In the parallel hybrid driving mode the energy generated in the internal combustion engine VKM, 1 is transferred to the gearbox "Getr", 13 via the planetary gear set D, 14 and the first clutch K1, 11 which is now closed. Third clutch K3 is also closed, leading to a fixed transmission ratio of the planetary gear set D, 14. First electrical traction drive E1, 7 may be used as generator to raise the load of the internal combustion engine VKM, 1, thereby charging a battery or other electrical consumers within the vehicle. If this is not preferred, first electrical traction drive E1, 7 may be running idle. In case first electrical traction drive E1, 7 is an electrical machine of the permanent-magnet type, it is advantageous to short the three phases of its stator during idle running mode, in order to avoid high self induction. The second electrical traction drive E2, 7 may contribute power to the vehicle propulsion, or may be used as a generator. Second clutch K2, 8 and brake B1, 10 are open.

In the pure combustion engine driving mode which not show in the figure as an example the second electrical traction drive E2, 9 is used as generator to supply electrical energy to the vehicle, while the first electrical traction drive E1, 7 is controlled to run in a stator phase short status to reduce resistance in the electrical traction drive dependent from the type of electrical machine used, like a permanent magnet type or a switched reluctance type. The objective is to avoid power loss by spinning the electrical traction drive E1, 7 passively. By using adapted electrical motors the spinning resistance is reduced In this mode third clutch K3 is closed, first clutch K1, 11 is closed, second clutch K2, 8 is open. Brake B1, 10 is also open.

The last drive mode shown in Figure 2d is a serial hybrid driving mode.The energy of the internal combustion engine VKM, 1 is transferred via the planetary gear set D, 14 to the first electrical traction drive E1, 7, now acting as a generator. Brake B1, 10 is closed and third clutch K3 is open. This leads to a favorable transmission ratio of the planetary gear set D, 14, increasing revolution speed of the first electrical traction drive E1, 7 compared to the revolution speed of the internal combustion engine VKM, 1. At least part of the electrical energy generated in first electrical traction drive E1, 7 is transferred electrically to the second electrical traction drive E2, 9. Second clutch K2, 8 is open. The internal combustion engine VKM, 1 may run on one or several favorable load points which show a high degree of efficiency. Excess energy generated in the first electrical traction drive may be stored in a battery. Second electrical traction drive E2, 9 provides propulsion for the vehicle, while first clutch K1, 11 is open.

The generator functionality of the separately used second electrical traction drive E2, 9 is better since the smaller machine has a high degree of efficiency.

The advantage of the concept is the high level of flexibility to optimize energy flows. The use of the concept allows parallel and serial drive with a high level of reliability.

With the concept a drive-away clutch is not necessary. The use of a parallel axis design allows to arrange the first and second electrical traction drives E1, 7 and E2, 9 with a higher degree of freedom, using the available installation space most efficiently

The following table shows the activation status of the different components of the concept in the different drive states as shown in figure 2, where 0 means an open condition, and 1 a closed condition.

| **Driving Modes** | **K2, 11** | **K2,8** | **K3** | **B1, 10** |
|---|---|---|---|---|
| Electric Driving Single Motor | 0 | 0 | 0/1 | 0/1 |
| Electric Driving Dual Motor | 0 | 1 | 0 | 0 |
| Starting VKM, 1 with one motor, while driving electrically | 0 | 0 | 0 | 1 |
| Starting VKM, 1 with two motors | 0 | 1 | 0 | 1 |
| Combustion engine driving mode | 1 | 0 | 1 | 0 |
| Parallel Hybrid driving mode | 1 | 0 | 1 | 0 |
| Serial Hybrid driving more | 0 | 0 | 0 | 1 |

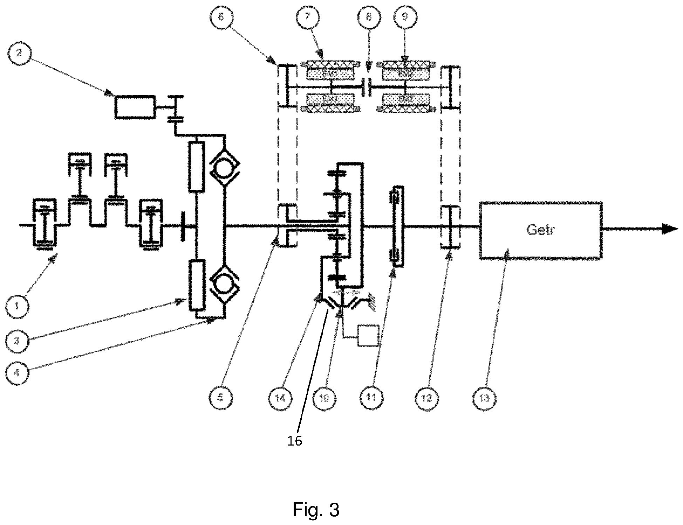

Figure 3 shows the concept in more details.

The internal combustion engine VKM, 1 is coupled via a flywheel 3 and a torsional damper 4 with a planetary carrier of the planetary gear set D, 14. A sun gear of the planetary gear set D, 14 is connected to the first electric traction drive E1, 7. A ring gear is connected via first clutch K1, 11 to the gearbox "Getr", 13.

Brake B1, 10 and third clutch K3, 16 are connected with the planetary gear set D, 14. Brake 10 and the third clutch K3 are actuated with a mechanism which comprises only one actuator. Clutch K3, 16 is prepared to connect the ring gear with the planetary carrier and may thereby lock the complete planetary gear set D, 14, so that all three components run on same revolution speed. When clutch K3, 16 is closed, brake 10 is open and vice versa. The mechanism may also comprise a neutral position, where neither clutch K3, 16 nor brake B1, 10 is engaged. When brake B1, 10 is closed the ring gear is blocked. So it is not possible to transfer power to the gearbox. The first electric traction drive E1, 7 therefore is able to start the combustion engine VKM, 1. Due to locking the brake B1, 10 the gear ratio between the first electrical traction drive E1, 7 and the combustion engine VKM, 1 is Carrier = Msungear * (1+i); where i = Zringgear/Zsungear.

The first electrical traction drive E1, 7 is installed on the axis 17 which is parallel to main axis 15, and is connected via transmission 6 with a shaft 5, which is connected with the sun gear of the planetary gear set D, 14.

The second electrical traction drive E2, 9 is either installed coaxial or in parallel to the main axis 15. The second electrical traction drive E2, 9 is connected to the gearbox "Getr", 13, via a transmission 12, so that a pure electric drive within all speeds of the gearbox is possible. In addition the second clutch K2, 11 can be replaced by a torque converter. In this case the second electrical traction drive E2, 9 has to be connected in front of the torque converter input between planetary gear set D, 14 and torque converter. Transmissions 6 and 12 are realized in any way a person skilled in the art would use, for example by using a belt drive a chain drive, or a gear set drive.

In case the battery which provides electrical energy to the first and/or second electrical traction drives is empty or shows a malfunction, the internal combustion engine may be started with an auxiliary starter motor 2. The auxiliary starter motor 2 may be powered by a low-voltage battery as is well known in the art.

**Legend:**

| | | | |
|---|---|---|---|
| 1 | internal combustion engine, VKM | 6 | transmission from E1, 7 to sungear |
| 2 | auxiliary starter motor | | |
| 3 | fly wheel | 7 | first electrical traction drive E1 |
| 4 | torsional damper | 8 | second clutch K2 |
| 5 | shaft to sun gear | 9 | second electrical traction drive E2 |
| 10 | brake B1 | 14 | planetary gear set D |
| 11 | first clutch K1 | 15 | main axis |
| 12 | transmission | 16 | third clutch K3 |
| 13 | gearbox "Getr" | 17 | Second axis |

## Claims

1. A device to drive an automotive vehicle comprising an internal combustion engine (VKM, 1) which is connected to a planetary gear set (14, D) and via this planetary gear set (14, D) via a first clutch (11, K1) with a gearbox (13, "Getr"), wherein the internal combustion engine (VKM, 1), the planetary gear set (14, D) and the first clutch (11, K1) are arranged along a main axis (15), and wherein the planetary gear set (14, D) is connected to a first electrical traction drive (7, E1) and this first electrical traction drive (7, E1) is connected to a second electrical traction drive (9, E2), **characterized in that** the two electrical traction drives (7, E1, 9, E2) are arranged along a second axis (17) parallel to the main axis (15), and that the connection between the two electrical traction drives (7, E1, 9, E2) is a mechanical interruptable element (8, K2).

2. A device to drive an automotive vehicle according claim 1, wherein the two electrical traction drives serially arranged along the second axis (17) are connected to the main axis (15) and to the gearbox (13, "Getr") via transmission means (6, 12).

3. A device to drive an automotive vehicle according claim 1 or 2 wherein the two electrical traction drives (E1, E2, 7, 9) are connected by a second clutch (8, K2).

4. A device to drive an automotive vehicle according claim 1 or 2 wherein the two electrical traction drives (E1, E2, 7, 9) are connected by a torque converter.

5. A device to drive an automotive vehicle according claim 2, wherein the axes (15, 17) are mechanically coupled by a transmission belt or chain.

6. A device to drive an automotive vehicle according one of the previous claims **characterized in that** the first electrical traction drive (E1, 7) is configured to reduce spinning loss running idle.

7. A device to drive an automotive vehicle according one of the previous claims **characterized in that** main axis (15) further comprises a brake (B1, 10).

8. A device to drive an automotive vehicle according claim 7 **characterized in that** the first clutch (K1, 11) and the brake (B1, 10) are connected to a single common actuator.

9. Method to drive an automotive vehicle comprising an internal combustion engine (VKM, 1) which is connected to a planetary gear set (14, D) and via this planetary gear set (14, D) via a first clutch (11, K1) with a gearbox (13, "Getr"), wherein the internal combustion engine (VKM, 1), the planetary gear set (14, D) and the first clutch (11, K1) are arranged along a main axis (15), wherein the planetary gear set (14, D) is connected to a first electrical traction drive (7, E1) and this first electrical traction drive (7, E1) is connected to a second electrical traction drive (9, E2), wherein the two electrical traction drives (7, E1, 9, E2) are arranged along a second axis (17) parallel to the main axis (15), and wherein the connection between the two electrical traction drives (7, E1, 9, E2) is a mechanical interruptable element, **characterized in that** the connection between the two electrical traction drives (7, E1, 9, E2) is interrupted or connected dependant on a driving status of the vehicle.

## Patentansprüche

1. Vorrichtung zum Antrieb eines Kraftfahrzeugs, die eine Brennkraftmaschine (VKM, 1) umfasst, die mit einem Planetenradsatz (14, D) und über diesen Planetenradsatz (14, D) über eine erste Kupplung (11, K1) mit einem Getriebe (13, "Getr") verbunden ist, wobei die Brennkraftmaschine (VKM, 1), der Planetenradsatz (14, D) und die erste Kupplung (11, K1) entlang einer Hauptachs (15) angeordnet sind und wobei der Planetenradsatz (14, D) mit einem ersten elektrischen Fahrantrieb (7, E1) verbunden ist und dieser erste elektrische Fahrantrieb (7, E1) mit einem zweiten elektrischen Fahrantrieb (9, E2) verbunden ist, **dadurch gekennzeichnet, dass** die beiden elektrischen Fahrantriebe (7, E1, 9, E2) entlang einer parallel zur Hauptachse (15) verlaufenden zweiten Achse (17) angeordnet sind und dass die Verbindung zwischen den beiden elektrischen Fahrantrieben (7, E1, 9, E2) ein mechanisches trennbares Element (8, K2) ist.

2. Vorrichtung zum Antrieb eines Kraftfahrzeugs nach Anspruch 1, wobei die beiden entlang der zweiten Achse (17) seriell angeordneten elektrischen Fahrantriebe über ein Kraftübertragungsmittel (6, 12) mit der Hauptachse (15) und dem Getriebe (13, "Getr") verbunden sind.

3. Vorrichtung zum Antrieb eines Kraftfahrzeugs nach Anspruch 1 oder 2, wobei die beiden elektrischen Fahrantriebe (E1, E2, 7, 9) durch eine zweite Kupplung (8, K2) verbunden sind.

4. Vorrichtung zum Antrieb eines Kraftfahrzeugs nach Anspruch 1 oder 2, wobei die beiden elektrischen Fahrantriebe (E1, E2, 7, 9) durch einen Drehmomentwandler verbunden sind.

5. Vorrichtung zum Antrieb eines Kraftfahrzeugs nach Anspruch 2, wobei die Achsen (15, 17) durch einen Kraftübertragungsriemen oder eine Kraftübertragungskette mechanisch gekoppelt sind.

6. Vorrichtung zum Antrieb eines Kraftfahrzeugs nach einem der vorhergehenden Ansprüche, **dadurch gekennzeichnet, dass** der erste elektrische Fahrantrieb (E1, 7) dazu konfiguriert ist, Drehverlust im Leerlauf zu reduzieren.

7. Vorrichtung zum Antrieb eines Kraftfahrzeugs nach einem der vorhergehenden Ansprüche, **dadurch gekennzeichnet, dass** die Hauptachse (15) ferner eine Bremse (B1, 10) umfasst.

8. Vorrichtung zum Antrieb eines Kraftfahrzeugs nach Anspruch 7, **dadurch gekennzeichnet, dass** die erste Kupplung (K1, 11) und die Bremse (B1, 10) mit einem einzigen gemeinsamen Aktuator verbunden sind.

9. Verfahren zum Antrieb eines Kraftfahrzeugs, das eine Brennkraftmaschine (VKM, 1) umfasst, die mit einem Planetenradsatz (14, D) und über diesen Planetenradsatz (14, D) über eine erste Kupplung (11, K1) mit einem Getriebe (13, "Getr") verbunden ist, wobei die Brennkraftmaschine (VKM, 1), der Planetenradsatz (14, D) und die erste Kupplung (11, K1) entlang einer Hauptachse (15) angeordnet sind und wobei der Planetenradsatz (14, D) mit einem ersten elektrischen Fahrantrieb (7, E1) verbunden ist und dieser erste elektrische Fahrantrieb (7, E1) mit einem zweiten elektrischen Fahrantrieb (9, E2) verbunden ist, wobei die beiden elektrischen Fahrantriebe (7, E1, 9, E2) entlang einer parallel zur Hauptachse (15) verlaufenden zweiten Achse (17) angeordnet sind und wobei die Verbindung zwischen den beiden elektrischen Fahrantrieben (7, E1, 9, E2) ein mechanisches trennbares Element ist, **dadurch gekennzeichnet, dass** die Verbindung zwischen den beiden elektrischen Fahrantrieben (7, E1, 9, E2) in Abhängigkeit von einem Fahrstatus des Fahrzeugs getrennt oder hergestellt wird.

## Revendications

1. Dispositif pour entraîner un véhicule automobile comprenant un moteur à combustion interne (VKM, 1) qui est relié à un train planétaire (14, D) et par le biais de ce train planétaire (14, D) par le biais d'un premier embrayage (11, K1) à une boîte de vitesses (13, « Getr »), le moteur à combustion interne (VKM, 1), le train planétaire (14, D) et le premier embrayage (11, K1) étant agencés le long d'un axe principal (15) et le train planétaire (14, D) étant relié à un premier mécanisme de traction électrique (7, E1) et ce premier mécanisme de traction électrique (7, E1) étant relié à un second mécanisme de traction électrique (9, E2), **caractérisé en ce que** les deux mécanismes de traction électriques (7, E1, 9, E2) sont agencés le long d'un second axe (17) parallèle à l'axe principal (15), et **en ce que** la liaison entre les deux mécanismes de traction électriques (7, E1, 9, E2) est un élément mécanique interruptible (8, K2).

2. Dispositif pour entraîner un véhicule automobile selon la revendication 1, dans lequel les deux mécanismes de traction électriques agencés en série le long du second axe (17) sont reliés à l'axe principal (15) et à la boîte de vitesses (13, « Getr ») par le biais de moyens de transmission (6, 12).

3. Dispositif pour entraîner un véhicule automobile selon la revendication 1 ou 2, dans lequel les deux mécanismes de traction électriques (E1, E2, 7, 9) sont reliés par un second embrayage (8, K2).

4. Dispositif pour entraîner un véhicule automobile selon la revendication 1 ou 2, dans lequel les deux mécanismes de traction électriques (E1, E2, 7, 9) sont reliés par un convertisseur de couple.

5. Dispositif pour entraîner un véhicule automobile selon la revendication 2, dans lequel les axes (15, 17) sont accouplés mécaniquement par une courroie ou une chaîne de transmission.

6. Dispositif pour entraîner un véhicule automobile selon l'une des revendications précédentes, **caractérisé en ce que** le premier mécanisme de traction électrique (E1, 7) est configuré pour réduire les pertes de rotation en marche à vide.

7. Dispositif pour entraîner un véhicule automobile selon l'une des revendications précédentes, **caractérisé en ce que** l'axe principal (15) comprend en outre un frein (B1, 10).

8. Dispositif pour entraîner un véhicule automobile selon la revendication 7, **caractérisé en ce que** le premier embrayage (K1, 11) et le frein (B1, 10) sont reliés à un actionneur commun unique.

9. Procédé pour entraîner un véhicule automobile comprenant un moteur à combustion interne (VKM, 1) qui est relié à un train planétaire (14, D) et par le biais de ce train planétaire (14, D) par le biais d'un premier embrayage (11, K1) à une boîte de vitesses (13, « Getr »), le moteur à combustion interne (VKM, 1), le train planétaire (14, D) et le premier embrayage (11, K1) étant agencés le long d'un axe principal (15), le train planétaire (14, D) étant relié à un premier mécanisme de traction électrique (7, E1) et ce premier mécanisme de traction électrique (7, E1) étant relié à un second mécanisme de traction électrique (9, E2), les deux mécanismes de traction électriques (7, E1, 9, E2) étant agencés le long d'un second axe (17) parallèle à l'axe principal (15), et la liaison entre les deux mécanismes de traction électriques (7, E1, 9, E2) étant un élément mécanique interruptible, **caractérisé en ce que** la liaison entre les deux mécanismes de traction électriques (7, E1, 9, E2) est interrompue ou établie en fonction d'un état d'entraînement du véhicule.
